# EUROPÄISCHE PATENTSCHRIFT

(11) **EP 2 871 022 B1**
(45) Veröffentlichungstag und Bekanntmachung des Hinweises auf die Patenterteilung: **28.06.2017**
(21) Anmeldenummer: 14003746.6
(22) Anmeldetag: 06.11.2014
(51) Int. Cl.: B23P 9/02, B21H 7/18, B23B 27/24, C23C 4/02, B24B 39/02

(54) **Rollierwerkzeug**
Rolling tool
Outil de galetage

(30) Priorität: 11.11.2013 DE 102013018899
(43) Veröffentlichungstag der Anmeldung: 13.05.2015
(73) Patentinhaber: Hahn, Karlheinz, 94315 Straubing (DE)
(72) Erfinder: Hahn, Karlheinz, 94315 Straubing (DE)
(74) Vertreter: Zeitler Volpert Kandlbinder Patent- und Rechtsanwälte Partnerschaft mbB

(56) Entgegenhaltungen:
- EP-A2- 2 679 324
- WO-A1-2005/084857
- WO-A1-2012/084612
- DE-A1- 19 802 842
- DE-A1-102012 207 455

## Beschreibung

Die Erfindung betrifft ein Rollierwerkzeug mit einem in einer Vorschubrichtung vorstehenden Rollenträger, an dem in einer Umfangsrichtung eine oder mehrere Rollierrollen zum Bearbeiten einer Werkstückoberfläche um eine Rollenachse drehbar angeordnet sind, wobei zumindest eine Rollierrolle eine Anlagefläche zur Anlage an dem Werkstück mit einem Aufrauungsabschnitt mit bzgl. der Rollenachse (A) radial nach außen vorstehenden Erhebungen aufweist.
Ein Rollierwerkzeug dient dem spanlosen Glätten von rauen Oberflächen durch Wälzkörper in Form von Rollierrollen. So weist eine metallische Oberfläche nach Grobbearbeitungsgängen wie etwa Drehen, Fräsen, Schleifen etc. regelmäßig eine Oberflächenstrukturierung oder eine Rauigkeit auf, die durch einen Rolliervorgang, der eine Feinstbearbeitung darstellt, vorständig geglättet werden kann. Dabei fährt der die Rollierrollen tragende Rollenträger in Umfangsrichtung rotierend in einer Vorschubrichtung an der zu glättenden Fläche des Werkstücks entlang, wobei die Rollierrollen die Werkstückoberfläche kontaktieren. Aufgrund eines Anpressdrucks der Rollierrollen wird die Oberflächenschicht des Werkstücks durch plastische Verformung geglättet. Dazu werden beim Rollieren die Rollierrollen mit einer senkrecht zur Lauffläche gerichteten Kraft (Rollierkraft) beaufschlagt. Neben der Glättungswirkung wird deshalb auch eine Verfestigungswirkung am Werkstück erzielt.

Das zu glättende Werkstück besteht dabei regelmäßig aus einem weichen Werkstoff wie etwa Aluminium und die Rollierrollen aus einem härteren Werkstoff wie etwa Stahl.

Während die Glättungswirkung bei herkömmlichen Rollierwerkzeugen im Vordergrund steht, kann zusätzlich auch der Verfestigungs- und Verformungseffekt des Rollierwerkzeugs ausgenutzt werden. So hat sich etwa herausgestellt, dass in eine zu bearbeitende Oberfläche eingebrachte Nuten mit dazwischen angeordneten Stegen mithilfe eines Rollierwerkzeugs derart verformbar sind, dass Hinterschnitte entstehen. Die einwirkende Rollierkraft drückt nämlich beim Rollieren von oben auf die Stege und plättet deren Scheitelabschnitte, während die Nutböden im Wesentlichen unverändert bleiben. Dieser Effekt kann besonders vorteilhaft sein, da die Herstellung von Nuten mit Hinterschnitten mithilfe herkömmlicher spanender Verfahren komplex und zeitaufwändig ist. Anschließend kann eine Beschichtungsmasse in die Nuten mit Hinterschnitt eingebracht werden, wobei diese Beschichtungsmasse in die Hinterschnittabschnitte der Nuten eingreifen kann, so dass sie besonders fest in den Nuten verankert ist. Ein solches Verfahren ist in der noch nicht veröffentlichten Patentanmeldung DE 10 2013 011 726.7 beschrieben.

Es hat sich allerdings herausgestellt, dass insbesondere bei einer in Verlaufsrichtung der Nuten auf die Beschichtung einwirkenden Kraft dennoch eine Ablösung bzw. ein Versatz der Beschichtung gegenüber der Werkstückoberfläche möglich ist.

Aus der gattungsgemäßen Druckschrift DE 10 2012 207 455 A1 ist ein Werkzeug und ein Verfahren zum mechanischen Aufrauen der Oberfläche einer Zylinderbohrung einer Brennkraftmaschine bekannt, wobei die Zylinderbohrung anschließend thermisch beschichtet wird. Nach der Bearbeitung einer Zylinderbohrung mit einer Feinbohrschneide als ein erstes Werkzeug werden mit einer Formschneide als zweites Werkzeug rechteckförmige Nuten/Profile hergestellt. An den Flanken dieser rechteckförmigen Nuten/Profile werden durch Umformung der Profilstege zusätzliche Sub-Mikroprofile, wie seitliche hinterschnittartige Materialüberhänge mit kleinsten Rissen und Verschuppungen hergestellt, die zu einer Erhöhung der Haftfestigkeit beitragen. Hierzu ist ein drittes Werkzeug mit einer drehbar gelagerten Umformwalze vorgesehen. Um ein reines Abrollen der Funktion der Walze ohne Schlupf oder Gleiten zwischen Werkstück und Walze zu gewährleisten, ist die Walze entsprechend der sich aus dem Vorschub der Vorrichtung bei der Bearbeitung einer Bohrung ergebenden Steigung geneigt. Die Mantelfläche der Walze ist bestückt mit einer gebundenen Hartstoffkörnung, wie zum Beispiel einer Diamantkörnung, welche hinsichtlich der Kornstrucktur so ausgelegt ist, dass die Kornspitzen in die vom ersten Werkzeug geschaffenen, erhabenen Profilstege eingedrückt werden, welche eine seitliche Verdrängung des Materials bewirken und damit aufgrund des Materialüberhanges hinterschnittartige Profile bilden. Die Walze kann auch konisch ausgebildet sein, so dass mit zunehmender axialer Überfahrung einer Bearbeitungsstelle ein zunehmender Druck aufgebaut wird und damit eine zunehmende Verformung der Stege bewirkt wird.

Die WO 2012/084612 A1 beschreibt ein Bearbeitungsverfahren und ein Bearbeitungswerkzeug zum Bearbeiten einer gekrümmten Werkstückoberfläche eines Werkstückes. Das Bearbeitungsverfahren umfasst eine Rollprägeoperation, bei der mindestens ein Wälzelement eines Bearbeitungswerkzeuges an einen zu bearbeitenden Abschnitt der gekrümmten Werkstückoberfläche unter einem vorgebbaren Anpressdruck abgerollt wird. Eine Außenfläche des Wälzelementes weist dabei in mindestens einem für den Abrollkontakt mit der Werkstückoberfläche bestimmten Abschnittsabschnitt eine raue Oberflächenstruktur auf. Der Anpressdruck wird so eingestellt, dass beim Abrollen des Wälzelementes auf der gekrümmten Werkstückoberfläche durch lokales Umformen von Werkstückmaterial im Bereich der Werkstückoberfläche eine raue Rollprägestruktur erzeugt wird. Das Wälzelement hat einen drehbar gelagerten Wälzelementkörper und eine raue Oberflächenstruktur ist in eine rotationssymmetrische Außenfläche des Wälzelementkörpers eingebracht. Der Wälzelementkörper ist beispielsweise nach Art eines Schleifsteins vollständig aus einem harten Material mit gebundenen Hartstoffkörnen ausgebildet, um eine raue Außenoberfläche zu bilden. Die Hartstoffkörner haben beispielsweise eine mittlere Korngröße von 30 µm bis 250 µm, wobei am Werkstückoberfläche eine gemittelte Rautiefe zwischen 10 µm und 100 µm erzeugt wird. Das Wälzelement ist um eine Wälzelementachse drehbar, welche exzentrisch zur Werkzeugachse, also mit Abstand außerhalb der Werkzeugaxhse, angeordnet. Durch Drehen des Bearbeitungswerkzeuges um seine Werkzeugachse rollt die Außenfläche des Wälzelementes während der Rollprägeoperation mit ihrer rauen Oberflächenstruktur auf der Innenfläche der zu bearbeitenden Bohrung ab und erzeugt die Rollprägestruktur. Am Werkzeugkörper ist ein relativ zur Werkzeugachse radial bewegliches Trägerelement angeordnet und das Wälzelement sit an dem Trägerelement drebar gelagert. Der Werkzeugkörper ist mit einem Keilabschnitt beispielsweise in Form eines Konus oder Kegelstumpfes ausgebildet. Dessen Schrägflächen wirken mit Schrägflächen an der Innenseite von Trägerelementen für die Wälzelemente nach Art eines Keilantriebs zusammen, so dass eine axiale Bewegung des Zustellelementes zu einer radialen Bewegung von Trägerelementen und der daran angebrachten Wälzelemente führt.
In Anbetracht der beschriebenen Probleme ist es die Aufgabe der vorliegenden Erfindung ein Werkzeug bereitzustellen, das eine mit Nuten ausgestattete Fläche derart vorbereitet, dass eine Beschichtung fest und haltbar daran angebracht werden kann.
Diese Aufgabe wird erfindungsgemäß durch eine Weiterbildung bekannter Rollierwerkzeuge gelöst, die im Wesentlichen dadurch gekennzeichnet ist, dass der Rollenträger einen sich in der Vorschubrichtung V konusförmig verjüngenden Abschnitt aufweist, wobei an einer Außenfläche des sich verjüngenden Abschnitts des Rollenträgers mehrere konusförmige Rollierrollen derart angeordnet sind, dass sie an der Außenfläche des Rollenträgers abrollen, wobei in der Außenfläche des Rollenträgers jeweils eine Vertiefung auf Höhe derjenigen Rollierrollen gebildet ist, die die Erhebungen tragen, wobei die Rollierrollen zur Einstellung eines Außenumfangs des Rollierwerkzeugs entlang einer konischen Außenfläche des Rollenträgers verschiebbar und in einer vorgegebenen Position fixierbar sind, wobei eine Abmessung des Aufrauungsabschnitts in der Vorschubrichtung kleiner ist als eine Abmessung der Vertiefung in der Vorschubrichtung.

Vorteilhafte Ausgestaltungen des Rollierwerkzeugs sind in den abhängigen Ansprüchen angegeben. Das Rollierwerkzeug wird zur aufrauenden Verformung verwendet. Zu diesem Zweck ist zumindest ein Abschnitt der Anlagefläche, die beim Rollieren das Werkstück kontaktiert und es unter Druck verformt, rau ausgebildet, so dass die Oberfläche des Werkstück durch die Rollierkraft nicht geglättet, sondern aufgeraut wird. Die zum Zweck des Aufrauens an der Rollierrolle vorgesehenen Erhebungen stehen dabei ausgehend von der Anlagefläche nach außen in Richtung auf das zu bearbeitende Werkstück vor.

Die radial von der Anlagefläche vorstehenden Erhebungen, die beim Rollieren an der zu bearbeitenden Werkstückoberfläche entlangrollen, verdichten die Werkstückfläche stärker als ein glatter Bereich der Anlagefläche, so dass eine Rauigkeit der bearbeiteten Werkstückfläche entsteht. Mit anderen Worten entsteht durch die Rollierkraftwirkung in der Werkstückfläche ein Negativbild der erhabenen Abschnitte der Anlagefläche. Je weiter die Erhebungen radial vorstehen und je rauer und ggf. ungleichmäßiger der Aufrauungsabschnitt ausgebildet ist, desto rauer wird auch die Werkstückfläche beim Rollieren. Um dennoch zu einem ausreichenden Verdichtungs- und Verformungseffekt zu kommen, hat es sich dabei als vorteilhaft erwiesen, dass der Aufrauungsabschnitt nicht der gesamten Anlagefläche entspricht, sondern nur in einem Teil der Anlagefläche der Rollierrolle gebildet ist.

Abschnitte der konisch zulaufenden Außenflächen von Rollierrolle und/oder Rollenträger sind einander zugewandt und kontaktieren einander. Dabei verjüngt sich der Rollenträger in der Vorschubrichtung konusförmig, während sich die Rollierrolle in der Vorschubrichtung konusförmig aufweitet. Die Rollierrolle wird beim Entlangfahren des Rollierwerkzeugs an der Werkstückoberfläche in der Vorschubrichtung beim Bearbeiten des Werkstücks sowohl in radialer als auch in der Vorschubrichtung entgegengesetzter Richtung gegen die konusförmige Außenfläche des Rollenträgers gepresst, so dass die beim Rollieren auftretenden Kräfte auf vorteilhafte Weise in den Rollenträger eingeleitet werden können.

Damit der dem Werkstück zugewandte Bereich der Anlagefläche trotz seiner Konizität im Wesentlichen parallel zur Oberfläche des Werkstücks verläuft, ist die Rollenachse gegenüber der Vorschubrichtung bspw. um etwa den halben Öffnungswinkel des Konus verkippt. Mit anderen Worten ist die Rollierrolle in verkippter Lage an die konusförmige Außenfläche des Rollenträgers angelehnt.

Eine besonders wirkungsvolle Aufrauung der Werkstückoberfläche kann sichergestellt werden, indem die nach außen vorstehenden Erhebungen aus einem harten Material wie etwa Hartmetall, Diamant o.dgl. gebildet werden. Die Erhebungen können auch einstückig bzw. einteilig mit der Rollierrolle gebildet sein. Vorzugsweise sind sie jedoch nachträglich zumindest abschnittsweise auf einen ursprünglich glatten Bereich der Anlagefläche der Rollierrolle aufgebracht. Der Aufrauungsabschnitt kann die Rollierrolle dabei in Umfangsrichtung vollständig umlaufen. Dies hat den Vorteil, dass beim Abrollen der Rollierrolle auf der Werkstückfläche nicht nur abschnittsweise eine Aufrauung entsteht.

Eine zufriedenstellende Rauheit der Werkstückoberfläche wird dadurch erzielt, dass die nach außen vorstehenden Erhebungen weiter als 10 µm, bevorzugt weiter als 100 µm und weniger weit als 2 mm, bevorzugt weniger als 1 mm von der im Wesentlichen glatt ausgebildeten Anlagefläche vorstehen. Wenn die Erhebungen nicht weit genug von der Anlagefläche vorstehen, ergibt sich kein ausreichender Aufrau-Effekt. Wenn sie andererseits zu weit vorstehen, kann das Werkzeug und/oder der Werkstück aufgrund der erheblichen Kräfte beschädigt werden.

Die nach außen vorstehenden Erhebungen können dabei nach Art einer Körnung und/oder Rillung bevorzugt in einem unregelmäßigen Muster von der Anlagefläche vorstehen. Ein Aufrauungsabschnitt mit körnigen, bevorzugt unregelmäßigen Erhebungen ist herstellbar, indem ein aushärtbares Erhebungsmaterial insbesondere in flüssiger Form auf die Anlagefläche aufgespritzt oder aufgesprüht und dann ausgehärtet wird. Beispielsweise kann flüssiges Hartmetall umlaufend auf einen Abschnitt der Anlagefläche aufgespritzt werden, so dass punktförmige bzw. schlierenförmige Erhebungen in einer unregelmäßigen Anordnung entstehen. Nach der Abkühlung erstarrt das Hartmetall. Alternativ oder zusätzlich können bspw. Diamantkörner oder anderes körniges Material an der Anlagefläche befestigt werden.

Ein Rollierwerkzeug kann zwei, drei oder mehr in gleichen Abständen in der Umfangsrichtung außen an dem Rollenträger angeordnete Rollierrollen aufweisen. Es hat sich allerdings herausgestellt, dass die Rauheit der Werkstückoberfläche wieder abnehmen kann, wenn mehrere Aufrauungsabschnitte ggf. mehrmals auf demselben Bereich des Werkstücks abrollen. Dies liegt daran, dass in diesem Fall die durch die abrollenden Erhebungen in der Werkstückfläche geschaffenen Vertiefungen eine zu große Fläche einnehmen, was die Rauheit insgesamt wieder beeinträchtigt. Deshalb kann erfindungsgemäß vorgesehen sein, dass nicht alle Rollierrollen die Erhebungen tragen, vorzugsweise nur eine Rollierrolle die Erhebungen trägt. Die Abmessung des Aufrauungsabschnitts in der Vorschubrichtung bzw. die Vorschubgeschwindigkeit des Rollierwerkzeugs können derart angepasst sein, dass jeder Bereich der Werkstückfläche nur begrenzt oft, vorzugsweise nur einmal, von einem Aufrauungsabschnitt überfahren wird.

Die Rollierrollen sind regelmäßig in einem den Rollenträger umlaufenden Käfig derart aufgenommen, dass sie eng an einer Außenfläche des Rollenträgers anliegen und um ihre eigene Achse (die Rollenachse) drehbar gelagert sind.

Um eine Beschädigung des Rollenträgers durch die von der Anlagefläche vorstehenden Erhebungen bei einer Drehung der Rollierrolle zu verhindern, ist an der der Rollierrolle zugewandten Außenfläche des Rollenträgers eine Vertiefung angeordnet, die zur Aufnahme derjenigen Erhebungen eingerichtet ist, die in einer bestimmten Drehlage der Rollierrolle dem Rollenträger zugewandt sind. Die Tiefe der Vertiefung ist vorzugsweise größer als die Höhe der Erhebungen, besonders bevorzugt größer als 1 mm.

Eine Anpassung des Rollierwerkzeugs an zu bearbeitende Hohlzylinder mit verschiedenen Innendurchmessern ist dadurch möglich, dass die Rollierrollen zur Einstellung eines Außenumfangs des Rollierwerkzeugs entlang einer konischen Außenfläche des Rollenträgers verschiebbar und in einer vorgegebenen Position fixierbar sind. So kann der Außendurchmesser des Rollierwerkzeugs bspw. durch eine Verschiebung des die Rollierrollen tragenden Käfigs entgegen der Vorschubrichtung vergrößert werden, wenn sich die Rollenträger in der Vorschubrichtung konusförmig verjüngt.

Um trotz dieser Verschiebbarkeit der Rollierrollen entlang einer Außenfläche des Rollenträgers eine Beschädigung des Rollenträgers durch die vorstehenden Erhebungen zu vermeidenist eine Abmessung des Aufrauungsabschnitts in der Vorschubrichtung kleiner als eine Abmessung der Vertiefung in der Vorschubrichtung. Somit sind die Erhebungen auch noch nach einer Anpassung des Außendurchmessers des Rollierwerkzeugs an eine bestimmte Werkstückgeometrie bei einer Drehung der Rollierrolle um die eigene Achse in der Vertiefung aufnehmbar.

Vorzugsweise dient das Rollierwerkzeug zur Bearbeitung einer Innenfläche eines rohrförmigen Abschnitts wie etwa einer Zylinderinnenfläche, wobei das Rollierwerkzeug in diesem Fall als Innen-Rollierwerkzeug gebildet ist. Alternativ ist jedoch auch die Ausgestaltung als Außen-Rollierwerkzeug denkbar.

Verbrennungsmotoren in Kraftfahrzeugen werden aus Gewichtsgründen regelmäßig mit einem Zylinderkurbelgehäuse aus Leichtmetall, insbesondere Aluminium, ausgebildet. Problematisch daran ist jedoch, dass die Innenwände der von dem Zylinderkurbelgehäuse ausgebildeten Zylinder wegen der tribologischen Eigenschaften des Leichtmetalls, insbesondere der vergleichsweise schlechten Verschleißfestigkeit, nur unzureichend als Laufflächen für die Kolben geeignet sind.

Um diese Problematik zu vermeiden, kann es vorgesehen sein, die Laufflächen des Leichtmetall-Zylinderkurbelgehäuses mit einer Beschichtung zu versehen, um die gewünschten tribologischen Eigenschaften für die Laufflächen zu realisieren. Die Beschichtung wird dabei regelmäßig durch Aufschmelzen des Beschichtungswerkstoffs und Aufspritzen auf die Zylinderwände realisiert.

Von besonderer Bedeutung bei der Beschichtung von Zylinderwänden ist es, eine gute Haftung der Beschichtung auf dem Grundwerkstoff zu realisieren. Hierzu ist es bekannt, vor dem Beschichten Nuten oder Rillen in die Laufflächen des Zylinderkurbelgehäuses einzubringen, um die Kontaktfläche zwischen den Schichten zu erhöhen. Vielfach wird dabei auch versucht, Hinterschnitte in der mit Nuten ausgestatteten Lauffläche auszubilden, in die der aufgeschmolzene Werkstoff der Beschichtung eindringen kann, um nach dem Aushärten eine formschlüssige Verbindung zwischen den Schichten zu realisieren. Dadurch wird ein Verzahnen der Beschichtungsschicht in der Zylinderwand erreicht, die einer formschlüssigen Verbindung gleichkommt. Zudem kann durch das plastische Verformen der Stege eine Verdichtung des Materials in den Stegen erzielt werden, was erneut einer Verbesserung der Haftung zwischen der Beschichtung und der Zylinderwand zugute kommen kann. Das Verformen der Stege kann symmetrisch und/oder asymmetrisch bezüglich der (radial zur Längsachse des Zylinders verlaufenden) Hochachsen der Stege erfolgen. Das Umformen der Stege kann mittels eines Rollierwerkzeugs erfolgen. Insbesondere zum Erzeugen asymmetrisch verformter Stege kann vorgesehen sein, ein Rollierwerkzeug einzusetzen, das über dem Umfang und/oder über seiner Länge eine Vielzahl von aus- und einfahrbaren Rollen aufweist, die während des Rolliervorgangs entsprechend aus- und eingefahren werden.
Erfindungsgemäß kann die Haftung zwischen der Beschichtung und dem Grundwerkstoff noch weiter verbessert werden, indem die jeweils zwischen den Nuten liegenden Scheitelflächen der Stege bzw. der Vorsprünge durch das Rollierwerkzeug nicht nur zur Ausbildung von Hinterschnitten "plattgedrückt" werden, sondern diese Scheitelflächen gleichzeitig durch die von der Anlagefläche der Rollierrolle vorstehenden Erhebungen aufgeraut werden. Auf diese Weise wird ein Versatz der Beschichtung nach deren Aushärtung vollständig verhindert, und eine besonders gute Haftung der Beschichtung an der Werkstückfläche wird sichergestellt.
Die Oberfläche des zylinderförmigen Werkstücks kann die Lauffläche eines Zylinders eines Verbrennungsmotors sein.
Wie erläutert, kann die Fläche anschließend bevorzugt durch ein thermisches Spritzverfahren mit einem Beschichtungswerkstoff beschichtet werden. Die Beschichtung kann insbesondere mittels thermischen Spritzens (z.B. Lichtbogendrahtspritzen) aufgebracht werden, wozu in bekannter Weise ein Spritzkopf rotierend angetrieben und entlang der Längsachse des Zylinders verfahren wird. Das aufgeschmolzene Beschichtungsmaterial kann dabei in die Nuten eindringen, diese ausfüllen und - nach dem Aushärten - die gewünschte formschlüssige Verbindung mit der Zylinderwand ausbilden.
Einzelheiten im Hinblick auf das Einbringen der Nuten in die Werkstückfläche sowie Einzelheiten im Hinblick auf das sich an das Rollieren anschließende Beschichtungsverfahren sind in der Patentanmeldung DE 10 2013 011 726.7 im Detail beschrieben.

In der folgenden Beschreibung wird die Erfindung unter Bezugnahme auf die beigefügten Zeichnungen erläutert. In den Zeichnungen zeigt:
- Fig. 1: eine schematische Schnittdarstellung eines erfindungsgemäßen Rollierwerkzeugs 10 bei der Bearbeitung der Innenfläche eines zylindrischen Werkstücks 20,
- Fig. 2: eine schematische Seitenansicht eines konusförmigen Teils einer Rollierrolle 13 mit nach außen vorstehenden Erhebungen, wie sie an dem in Fig. 1 gezeigten Rollierwerkzeug angebracht ist,
- Fig. 3: mehrere Darstellungen einer weiteren Ausführungsform eines erfindungsgemäßen Rollierwerkzeugs 10,
- Fig. 4: eine Seitenansicht eines erfindungsgemäßen Rollierwerkzeugs, das an einer mit Nuten versehenen, im Wesentlichen zylindrischen Innenfläche eines Werkstücks entlangfährt, wobei das Werkstück im Querschnitt dargestellt ist, und
- Fig. 5: mehrere schematische Schnittdarstellungen, die eine mit Nuten versehene Werkstückfläche vor und nach der Bearbeitung durch das erfindungsgemäße Rollierwerkzeug zeigen.

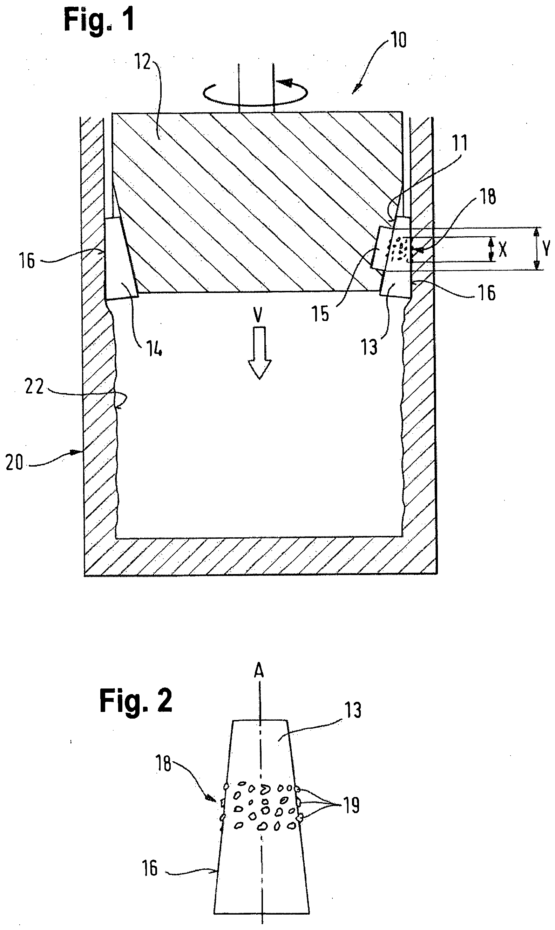

Fig. 1 zeigt eine erste Ausführungsform eines erfindungsgemäßen Rollierwerkzeugs 10 in einer schematischen Schnittansicht. Das Rollierwerkzeug durchfährt gerade einen im Wesentlichen zylinderförmigen Abschnitt eines rohrförmigen Werkstücks 20 in einer Vorschubrichtung V und dreht sich dabei um die eigene Achse. Das Rollierwerkzeug kann zu diesem Zweck mithilfe eines Dorns o.dgl. eingespannt sein. Selbstverständlich kann das Rollierwerkzeug alternativ auch fest eingespannt sein, und das Werkstück kann drehend in Richtung auf das Rollierwerkzeug 10 bewegt werden o. dgl.

Ein Außendurchmesser des Rollierwerkzeugs ist etwas größer als ein Innendurchmesser des Werkstücks 20 vor der Bearbeitung, so dass eine zu bearbeitende Innenfläche 22 des Werkstücks 20 bei der Bearbeitung plastisch verformt und radial nach außen verfestigt wird. Anders als bei herkömmlichen Rollierwerkzeugen wird allerdings die Innenwand des Werkstücks 20 nicht vollständig geglättet, sondern durch Erhebungen 19 des Rollierwerkzeugs 10 aufgeraut.

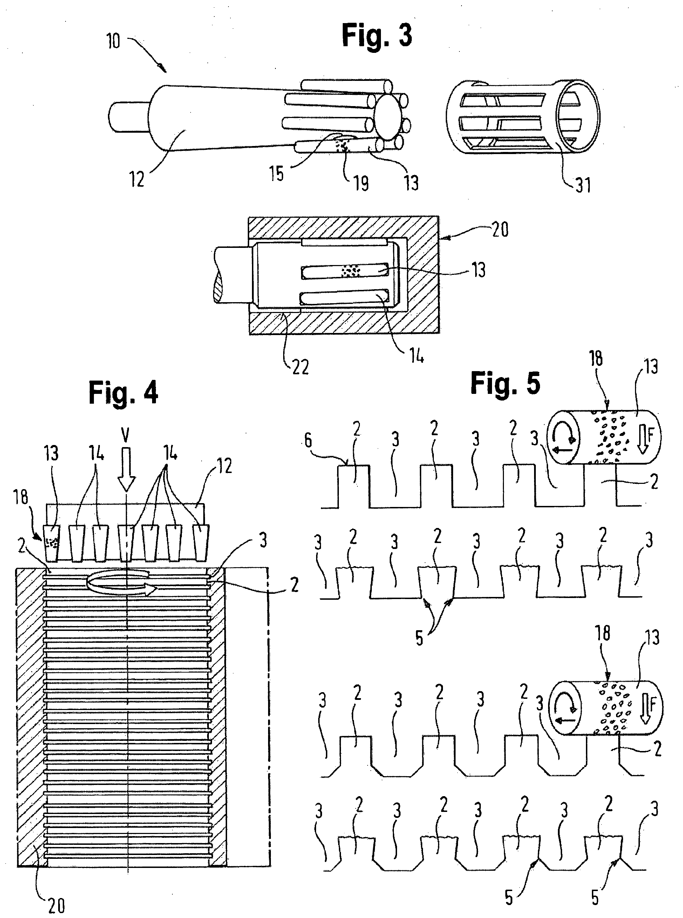

Das Rollierwerkzeug 10 weist einen in der Vorschubrichtung V vorstehenden, rotierbar gelagerten Rollenträger 12 auf, der einen sich in der Vorschubrichtung V konusförmig verjüngenden Abschnitt aufweist. An einer Außenfläche 11 des sich verjüngenden Abschnitts des Rollenträgers 12 sind mehrere im Wesentlichen konusförmige Rollierrollen 13, 14 derart angeordnet, dass sie an der Außenfläche 11 des Rollenträgers 12 abrollen können. Die Rollierrollen 13, 14 können dazu in Schlitzen eines Rollenkäfigs 31 (vgl. Fig. 3) aufgenommen sein, der die Außenfläche 11 des Rollenträgers umläuft, und der die Rollierrollen fest an der Außenfläche 11 des Rollenträgers hält. Auf die Rollierrollen 13, 14 wirkende Kräfte können durch die enge Abstützung am Rollenträger unmittelbar in diesen eingeleitet werden. Die Konizität der Außenfläche 11 des Rollenträgers bewirkt, dass Radial- und Axialkräfte von den Rollierrollen 13, 14 in den Rollenträger 12 einleitbar sind.

Die Rollierrollen 13, 14 weisen jeweils eine im Wesentliche konische Anlagefläche 16 zur Anlage an dem Werkstück 20 beim Rollieren auf. Die Rollenachse A, um die sich die Rollierrollen beim Rolliervorgang drehen können, ist derart schräggestellt, dass der der Werkstückfläche 22 jeweils zugewandte Teil der Anlagefläche 16 trotz der Konizität im Wesentlichen parallel zu der Werkstückfläche 22 verläuft. Beim Rollieren schräger (wie etwa kegeliger) Werkstückflächen o. dgl. können jedoch auch anders geformte Rollierrollen zum Einsatz kommen.

Ein Teil einer solchen Rollierrolle 13 ist in Fig. 2 vergrößert dargestellt. Weggelassen ist ein Kopfabschnitt der Rollierrolle, über den sie an einem Käfig 31 befestigt sein kann. Zumindest eine der Rollierrollen 13 hat erfindungsgemäß eine Anlagefläche 16 mit einem Aufrauungsabschnitt 18, der bzgl. der Rollenachse A nach außen vorstehende Erhebungen 19 aufweist. Wie in Fig. 2 schematisch dargestellt ist, umläuft der Aufrauungsabschnitt 18 die Rollierrolle 13, wobei die Erhebungen 19 körnig, punktförmig und/oder schlierenförmig in einer unregelmäßigen Anordnung von der Anlagefläche 16 vorstehen. Dieses Muster kommt daher, dass Hartmetall in flüssiger Form auf die Anlagefläche 16 aufgespritzt wurde, und das Hartmetall anschließend ausgehärtet wurde. Vorzugsweise trägt nur eine der zahlreichen Rollierrollen einen Aufrauungsabschnitt. Zu viele Rollierrollen 13 mit Aufrauungsabschnitt können die Rauigkeit der bearbeiteten Werkstückfläche 22 nämlich wiederum verringern.

Nach der Bearbeitung des Werkstücks 20 kann in der Werkstückfläche 22 ein Negativabdruck des Aufrauungsabschnitts 18 gebildet sein. Es ist jedoch auch möglich, dass ein Aufrauungsabschnitt 18 einen Bereich des Werkstücks 20 mehrfach überfährt, oder dass die Aufrauungsabschnitte mehrerer Rollierrollen einen Bereich des Werkstücks 20 überfahren, so dass sich in der Werkstückfläche die Negativbilder mehrerer Aufrauungsabschnitte wiederspiegeln. Die folgenden Parameter können einen Einfluss auf die zu erzeugende Rauheit der Werkstückfläche 22 haben: Vorschubgeschwindigkeit, Drehgeschwindigkeit des Rollierwerkzeugs, Anzahl der Rollierrollen mit Aufrauungsabschnitt, Abmessung des Aufrauungsabschnitts, Körnungsdichte bzw. Gestaltung des Aufrauungsabschnitts, Höhe der Erhebungen 19 des Aufrauungsabschnitts etc. Durch Anpassung dieser Parameter kann das Rollierwerkzeug an die zu erzeugende Rauheit angepasst werden.

In der Außenfläche 11 des Rollenträgers 12 ist jeweils eine Vertiefung 15 auf Höhe derjenigen Rollierrollen 13 gebildet, die die Erhebungen 19 tragen. Die Vertiefung 15 ist so eingerichtet, dass die Erhebungen bei einer Drehung der Rollierrolle 13 um die eigene Achse (die Rollenachse A) nicht in Kontakt mit der Außenfläche 11 des Rollenträgers kommen, und diesen somit nicht beschädigen können. Die Abmessung Y der Vertiefung in Vorschubrichtung V kann größer sein als die Abmessung des Aufrauungsabschnitts X in Vorschubrichtung V, so dass die Rollierrollen 13, 14 entlang der Außenfläche 11 der Rollenträgers 12 verschoben werden können, um den Außendurchmesser der Rollierwerkzeugs 10 an den Innendurchmesser des Werkstücks 20 anzupassen, ohne dass eine Beschädigung des Rollenträgers 12 zu befürchten ist.

In Fig. 3 ist eine alternative Ausführungsform eines erfindungsgemäßen Rollierwerkzeugs mit insgesamt sieben Rollierrollen dargestellt, von denen nur eine Rollierrolle 13 einen Aufrauungsabschnitt 18 hat. Ferner ist schematisch der Käfig 31 dargestellt, in dessen Schlitzen die Rollierrollen im befestigten Zustand an dem Rollenträger 12 angeordnet sind. Die Erhebungen 19 sind schematisch gepunktet dargestellt.

Die Figuren 4 und 5 zeigen ein Rollierverfahren zum Erzeugen von Nuten 3 mit Hinterschnitten 5, die in einer zylindrischen Innenfläche eines Werkstücks 20 in Umfangsrichtung verlaufen. Das Werkstück kann ein Zylinder eines Verbrennungsmotors sein, wobei die Lauffläche des Zylinders bearbeitet wird.

Zunächst werden die Nuten 3 in die zu bearbeitende Fläche des Werkstücks 20 eingebracht. In dieser Hinsicht wird auf die Patentanmeldung DE 10 2013 011 726.7 verwiesen, in der dieser Schritt im Detail erläutert ist. Zwischen den Nuten 3 sind jeweils umlaufende Stege 2 mit Scheitelflächen 6 gebildet, wobei die Rollierkraft auf diese Scheitelflächen 6 einwirkt und radial auf die Stege drückt, so dass beim Rollieren Nuten 3 mit Hinterschnitten 5 entstehen. Gleichzeitig werden die Scheitelflächen 6 der Stege 2 durch die Erhebungen aufgeraut.

Es entsteht damit eine Werkstückfläche 22, auf der die darauf aufzubringende Beschichtung besonders gut hält, da sie zum einen in den Hinterschnitten 5 der Nuten 3 verankert ist und zum anderen in die Vertiefungen der rauen Scheitelflächen 6 der Stege 2 eingreift.

## Patentansprüche

1. Rollierwerkzeug (10) mit einem in einer Vorschubrichtung (V) vorstehenden Rollenträger (12), an dem in einer Umfangsrichtung eine oder mehrere Rollierrollen (13, 14) zum Bearbeiten einer Werkstückoberfläche um eine Rollenachse (A) drehbar angeordnet sind, **wobei** zumindest eine Rollierrolle (13) eine Anlagefläche (16) zur Anlage an dem Werkstück (20) mit einem Aufrauungsabschnitt (18) mit bzgl. der Rollenachse (A) radial nach außen vorstehenden Erhebungen (19) aufweist, **dadurch gekennzeichnet, dass** der Rollenträger (12) einen sich in der Vorschubrichtung V konusförmig verjüngenden Abschnitt aufweist, wobei an einer Außenfläche (11) des sich verjüngenden Abschnitts des Rollenträgers (12) mehrere konusförmige Rollierrollen (13, 14) derart angeordnet sind, dass sie an der Außenfläche (11) des Rollenträgers (12) abrollen, wobei in der Außenfläche (11) des Rollenträgers (12) jeweils eine Vertiefung (15) auf Höhe derjenigen Rollierrollen (13) gebildet ist, die die Erhebungen (19) tragen, wobei die Rollierrollen (13, 14) zur Einstellung eines Außenumfangs des Rollierwerkzeugs (10) entlang einer konischen Außenfläche des Rollenträgers (12) verschiebbar und in einer vorgegebenen Position fixierbar sind, wobei eine Abmessung (X) des Aufrauungsabschnitts (18) in der Vorschubrichtung (V) kleiner ist als eine Abmessung (Y) der Vertiefung (15) in der Vorschubrichtung.

2. Rollierwerkzeug nach Anspruch 1, **dadurch gekennzeichnet, dass** die nach außen vorstehenden Erhebungen (19) aus einem harten Material wie etwa Hartmetall, Diamant o.dgl. bestehen.

3. Rollierwerkzeug nach einem der vorhergehenden Ansprüche, **dadurch gekennzeichnet, dass** die nach außen vorstehenden Erhebungen (19) weiter als 10 µm, bevorzugt weiter als 100 µm und weniger als 2 mm, bevorzugt weniger als 1 mm von der glatt ausgebildeten Anlagefläche (16) vorstehen.

4. Rollierwerkzeug nach einem der vorhergehenden Ansprüche, **dadurch gekennzeichnet, dass** die nach außen vorstehenden Erhebungen (19) nach Art einer Körnung und/oder schlieren- und/oder punktartig bevorzugt in einem unregelmäßigen Muster von der Anlagefläche (16) vorstehen, wobei sie insbesondere in flüssiger Form auf die Anlagefläche aufgespritzt oder aufgesprüht und dann ausgehärtet sind.

5. Rollierwerkzeug nach einem der vorhergehenden Ansprüche, **gekennzeichnet durch** zwei, drei oder mehr in der Umfangsrichtung außen an dem Rollenträger (12) angeordnete Rollierrollen (13, 14), von denen nur eine Rollierrolle (13) die Erhebungen (19) trägt.

6. Rollierwerkzeug nach einem der vorhergehenden Ansprüche, **dadurch gekennzeichnet, dass** das Rollierwerkzeug (10) ein Innen-Rollierwerkzeug zur Bearbeitung einer Innenfläche (22) eines rohrförmigen Abschnitts des Werkstücks (20) wie etwa einer Zylinderinnenfläche o. dgl. ist.

## Claims

1. Roller burnishing tool (10), having a roller carrier (12) projecting in a direction of feed (V) on which there are arranged, in a circumferential direction and to be rotatable on roller axes (A), one or more burnishing rollers (13, 14) for working on a surface of a workpiece, with at least one burnishing roller (13) having a contacting surface (16), for contacting the workpiece (20), which has a roughening portion (18) having excrescences (19) which project outwards radially relative to the roller axis (A), **characterised in that** the roller carrier (12) has a portion which tapers in a conical shape in the direction of feed V, a plurality of conical burnishing rollers (13, 14) being arranged on an outer surface (11) of the tapering portion of the roller carrier (12) in such a way that they roll against the outer surface (11) of the roller carrier (12), there being formed in the outer surface (11) of the roller carrier (12) a depression (15) on a level with each of those burnishing rollers (13) which bear the excrescences (19), the burnishing rollers (13, 14) being able to be displaced along a conical outer surface of the roller carrier (12) and being able to be fixed in a specified position, in order to set an outer circumference for the roller burnishing tool (10), a dimension (X) of the roughening portion (18) in the direction of feed (V) being less than a dimension (Y) of the depression (15) in the direction of feed.

2. Roller burnishing tool according to claim 1, **characterised in that** the outwardly projecting excrescences (19) comprise a hard material such as carbide metal, diamond, or the like.

3. Roller burnishing tool according to either of the preceding claims, **characterised in that** the outwardly projecting excrescences (19) project from the contacting surface (16), which is of a smooth form, by more than 10 µm and preferably more than 100 µm, and by less than 2 mm and preferably less than 1 mm.

4. Roller burnishing tool according to one of the preceding claims, **characterised in that** the outwardly projecting excrescences (19) project from the contacting surface (16) after the fashion of granulation and/or in streaks and/or at points, preferably in an irregular pattern, they being sprayed or sprinkled onto the contacting surface in liquid form and then hardened.

5. Roller burnishing tool according to one of the preceding claims, **characterised by** two, three or more burnishing rollers (13, 14) arranged on the outside of the roller carrier (12) in the circumferential direction, of which only one burnishing roller (13) carries the excrescences (19).

6. Roller burnishing tool according to one of the preceding claims, **characterised in that** the roller burnishing tool (10) is a tool for interior roller burnishing for working on an interior surface (22) of a tubular portion of the workpiece (20) such as an interior surface of a cylinder.

## Revendications

1. Outil de galetage (10) comprenant un porte-rouleaux (12) qui dépasse dans une direction d'avance (V) et sur lequel un ou plusieurs rouleaux de galetage (13, 14) sont agencés en rotation autour d'un axe de galetage (A) dans une direction périphérique pour oeuvrer une surface d'une pièce à oeuvrer, dans lequel au moins un rouleau de galetage (13) comporte une surface d'appui (16) pour venir en appui contre la pièce à oeuvrer (20) avec une portion rugueuse (18) comportant des reliefs (19) qui dépassent radialement vers l'extérieur par rapport à l'axe de galetage (A),
**caractérisé en ce que** le porte-rouleaux (12) comprend une portion qui va en se rétrécissant en forme de cône dans la direction d'avance (V), dans lequel plusieurs rouleaux de galetage coniques (13, 14) sont agencés sur une surface extérieure (11) de la portion qui va en se rétrécissant du porte-rouleaux (12), de telle façon qu'ils roulent sur la surface extérieure (11) du porte-rouleaux (12), dans lequel un renfoncement respectif est formé dans la surface extérieure (11) du porte-rouleaux (12) à la hauteur des rouleaux de galetage (13) qui portent les reliefs (19), dans lequel les rouleaux de galetage (13, 14) sont déplaçables le long d'une surface extérieure conique du porte-rouleaux (12) pour le réglage d'une périphérie extérieure, et sont susceptibles d'être fixés dans une position prédéterminée, dans laquelle une dimension (X) de la portion rugueuse (18) dans la direction d'avance (V) est plus petite qu'une dimension (Y) du renfoncement (15) dans la direction d'avance.

2. Outil de galetage selon la revendication 1, **caractérisé en ce que** les saillies (19) qui dépassent à l'extérieur sont en un matériau dur, comme par exemple un métal dur, du diamant, ou similaire.

3. Outil de galetage selon l'une des revendications précédentes, **caractérisé en ce que** les saillies (19) qui dépassent vers l'extérieur dépassent de plus de 10 µm, de préférence plus de 100 µm, et moins de 2 mm, de préférence moins de 1 mm, depuis la surface d'appui (16) réalisée lisse.

4. Outil de galetage selon l'une des revendications précédentes, **caractérisé en ce que** les saillies (19) qui dépassent vers l'extérieur (19) dépassent de la surface d'appui (16) à la manière de grains ou sous forme de traînées et/ou sous forme ponctuelle et de préférence dans un motif irrégulier, et elles sont projetées ou pulvérisées en particulier sous forme liquide sur la surface d'appui et ensuite durcies.

5. Outil de galetage selon l'une des revendications précédentes, **caractérisé par** deux, trois ou plus rouleaux de galetage (13,14) agencés dans la direction périphérique à l'extérieur sur le porte-rouleaux (12), parmi lesquels un seul rouleau de galetage (13) porte les saillies (19).

6. Outil de galetage selon l'une des revendications précédentes, **caractérisé en ce que** l'outil de galetage (10) est un outil de galetage intérieur pour l'usinage d'une surface intérieure (22) d'une portion de forme tubulaire de la pièce à oeuvrer (20), comme par exemple une surface intérieure cylindrique ou similaire.
